# EUROPEAN PATENT APPLICATION

(11) **EP 3 382 246 A1**
(43) Date of publication of application: **03.10.2018**
(21) Application number: 17001873.3
(22) Date of filing: 15.11.2017
(51) Int. Cl.: F16K 31/145, A63H 23/10, F16K 31/385

(54) **WATER-SAVING VALVE**

(30) Priority: 27.03.2017 CN 201720304824 U
(71) Applicant: Bestway Inflatables & Material Corp., Shanghai 201812 (CN)
(72) Inventor: Huang, Shuiyong, Shanghai, 201812 (CN); QIU, Wanbin, Shanghai, 201812 (CN); Sheng, Yabing, Shanghai, 201812 (CN)
(74) Representative: Müller-Boré & Partner Patentanwälte PartG mbB

(57) **Abstract**

A water-saving valve and a water-spraying toy are provided herein. The water-saving valve can include the following: a water inlet passageway and a water outlet passageway; a pressure regulating chamber body and a movable valve plate, both used to define one pressure regulating chamber, wherein the pressure regulating chamber communicates with the water inlet passageway via a water hole on the movable valve plate, the pressure regulating chamber body is provided with a drain hole, and the drain hole communicates with the pressure regulating chamber, the movable valve plate is configured to move between a first position and a second position by different pressure inside and outside the pressure regulating chamber acting on the movable valve plate to block or open respectively the water outlet passageway; and a drain assembly configured to block or open the drain hole.

## Description

### FIELD OF THE INVENTION

Certain embodiments of the present invention relate to the field of water valves. More particularly, for example, certain embodiments of the present invention relate to a water-saving valve and a water-spraying toy.

### BACKGROUND OF THE INVENTION

Many of the existing toys, such as entertainment pools, entertainment sprinklers, tumblers, and so on, are equipped with a nozzle or a spray pipe with a plurality of water spraying holes. The toys can be implemented to spray water when the spray pipe receives water from a communicating water source. Nevertheless, the water source is usually far away from the water-spraying toy. Thus, the water cannot be turned off in time during a time gap between entertainment uses, which can result in waste of water resources.

Therefore, what is needed is a water-saving valve.

### SUMMARY OF THE INVENTION

In one aspect, certain embodiments of the present invention provide a water-saving valve comprising: a water inlet passageway and a water outlet passageway; a pressure regulating chamber body and a movable valve plate, wherein the pressure regulating chamber body and the movable valve plate define one pressure regulating chamber, the pressure regulating chamber communicates with the water inlet passageway via a water hole on the movable valve plate, the pressure regulating chamber body is provided with a drain hole, the drain hole communicates with the pressure regulating chamber, and the movable valve plate is configured to move between a first position and a second position by different pressure inside and outside the pressure-regulating chamber acting on the movable valve plate to block or open respectively the water outlet passageway; and a drain assembly configured to block or open the drain hole.

In some embodiments, the water outlet of the water inlet passageway surrounds the water inlet of the water outlet passageway.

In some embodiments, the movable valve plate is configured to move axially between the first position and the second position to block or open the water inlet of the water outlet passageway.

In some embodiments, the water inlet passageway and the water outlet passageway are formed in a valve seat.

In some embodiments, the pressure regulating chamber body includes an end part and a side wall, the end part and the side wall together with the movable valve plate define the pressure regulating chamber.

In some embodiments, an upper end of the side wall of the pressure regulating chamber body is connected with the edge of the end part.

In some embodiments, the side wall of the pressure regulating chamber body is formed on the valve seat and the end part is removably connected with the upper end of the side wall of the pressure regulating chamber body.

In some embodiments, the movable valve plate comprises a flexible sealing member and a hard valve plate, and the water hole is disposed on the hard valve plate.

In some embodiments, a first reset spring is disposed within the pressure regulating chamber, the first end of the first reset spring abuts the end part of the pressure regulating chamber body, and the second end abuts the movable valve plate; the extension portion of the second end of the first reset spring is inserted through the water hole.

In some embodiments, the drain assembly comprises a sealing part and a rotatable part, wherein the sealing part is disposed on the rotatable part for blocking or opening the drain hole.

In some embodiments, the rotatable part is configured as a rotatable rod; the first end of the rotatable rod is supported on the pressure regulating chamber body, and the second end of the rotatable rod rotates about a supporting point; the sealing part is disposed between the first end and the second end of the rotatable rod; and the rotatable rod is configured to drive the sealing part disposed on it to block or open the drain hole when the second end of the rotatable rod rotates about the supporting point.

In some embodiments, the drain assembly further comprises a button configured to drive the second end of the rotatable rod to rotate about the supporting point to an open position, in which the seal part opens the drain hole.

In some embodiments, the button is provided with a slide bar, and the slide bar is inserted through a pipe formed on the valve seat and abuts the second end of the rotatable rod to drive the second end of the rotatable rod to rotate about the supporting point to the open position, in which the seal part opens the drain hole.

In some embodiments, the drain assembly further comprises a second reset spring disposed between the button and the valve seat; and the second reset spring is configured to drive the button to restore to an original position when the button is released, so that the rotatable rod restores to a blocking position, and the seal part blocks the drain hole.

In some embodiments, the drain assembly further comprises a reset mechanism configured to drive the rotatable rod to restore to the blocking position when the button is released, so as to make the seal part block the drain hole.

In some embodiments, the reset mechanism is configured as a torsion spring.

In some embodiments, the button is provided with a soft cushion part.

In some embodiments, the water-saving valve further comprises a protective cover connected to the valve seat.

In another aspect, the present invention provides a water-spraying toy comprising any one of the water-saving valves described herein.

Compared with the prior art, the technical solutions of certain embodiments of the present invention have the following advantages: the water-saving valve is in the closed state by default when the water inlet passageway of the water-saving valve provided herein communicates with the water source, that is, the movable valve plate blocks the water outlet passageway. At this moment, if the button is pressed by the user to open the drain hole, the pressure inside the pressure regulating chamber is decreased, and the movable valve plate moves to the position of opening the water outlet passageway, then the water-saving valve is switched from the closed state to the open state. At this time, if the button is released by the user, the button is restored to an original position and the drain hole is blocked, the water from the water source gradually flows into the pressure regulating chamber through the water hole, then the pressure inside the pressure regulating chamber is increased, the movable valve plate moves gradually toward the water outlet passageway, and after a preset time, the movable valve plate moves to the position of blocking the water outlet passageway. That is, the water-saving valve can be automatically switched from the open state to the closed state after the preset time. Therefore, the water-saving valve provided herein can be implemented to be automatically shut down.

Further, the realization of the automatic closing function of the water-saving valve completely depends on a mechanical mode, which does not need to be controlled by the control circuit. Therefore, it can reduce the complexity of the configuration of the water-saving valve.

Further, the water-saving valve can be applied to the water-spraying toy, so as to realize automatically stopping water spraying action to save water resources.

### BRIEF DESCRIPTION OF THE DRAWINGS

For proper understanding of the invention, reference should be made to the accompanying drawings, wherein:
FIG. 1 illustrates a perspective view of a water-saving valve provided by an embodiment disclosed herein.
FIG. 2 illustrates an exploded view of a water-saving valve provided by an embodiment disclosed herein.
FIG. 3 illustrates a top view of a water-saving valve provided by an embodiment disclosed herein.
FIG. 4 illustrates a cross-sectional view along the A-A section of the water-saving valve shown in FIG. 3.
FIG. 5 illustrates a cross-sectional view along the B-B section of the water-saving valve shown in FIG. 3.
FIG. 6 illustrates another cross-sectional view along the B-B section of the water-saving valve shown in FIG. 3.
FIG. 7 illustrates a cross-sectional view of a water-saving valve provided by another embodiment disclosed herein.

### DETAILED DESCRIPTION OF THE INVENTION

As described in the background, in order to realize the function of spraying water, the existing water-spraying toys are equipped with a water spray pipe that is communicating with water sources. Nevertheless, since the water source is usually far away from the water-spraying toy, the water cannot be turned off in time during a time gap between entertainment uses, and the water resource is wasted.

In view of this, a water-saving valve is provided herein, and suitable for the water-spraying toys. The water-saving valve comprises: a water inlet passageway and a water outlet passageway; a pressure regulating chamber body and a movable valve plate, wherein the pressure regulating chamber body and the movable valve plate define one pressure regulating chamber, the pressure regulating chamber communicates with the water inlet passageway via a water hole on the movable valve plate, the pressure regulating chamber body is provided with a drain hole, and the drain hole communicates with the pressure regulating chamber, and the movable valve plate is configured to move between a first position and a second position by different pressure inside and outside the pressure-regulating chamber acting on the movable valve plate to block or open respectively the water outlet passageway; and a drain assembly configured to block or open the drain hole. Therefore, the water in the pressure regulating chamber flows out of the drain hole when the drain assembly opens the drain hole, then the water pressure inside the pressure regulating chamber is less than that of outside the pressure regulating chamber, and the movable valve plate can move gradually from a position of blocking the water outlet passageway to a position of opening the water outlet passageway, and the water-saving valve is switched from a closed state to an open state. The water from the water source flows into and fully fills the pressure regulating chamber through the water hole when the drain assembly blocks the drain hole, and the water-saving valve is in the closed state. At this moment, the water pressure inside the pressure regulating chamber is greater than that of outside the pressure regulating chamber, and the movable valve plate can move gradually from the position of opening the water outlet passageway to the position of blocking the water outlet passageway, that is, the water-saving valve can be automatically switched from the open state to the closed state after the preset time. Therefore, the water-saving valve provided herein can be automatically shut down after being opened for a preset time. The water-spraying toy provided herein can automatically stop spraying water after a preset time.

In order to achieve the above purposes, characteristics and advantages of the certain embodiments of the present invention being more clearly understood, the following is a detailed description of the specific embodiments disclosed herein combining with the drawings.

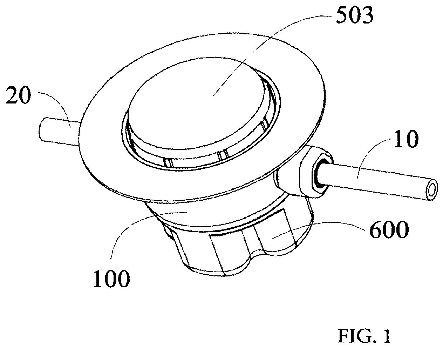

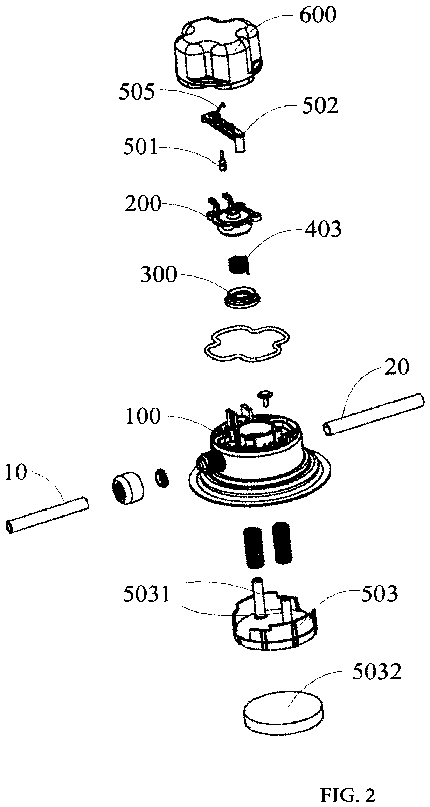

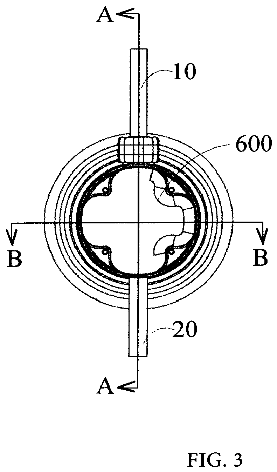

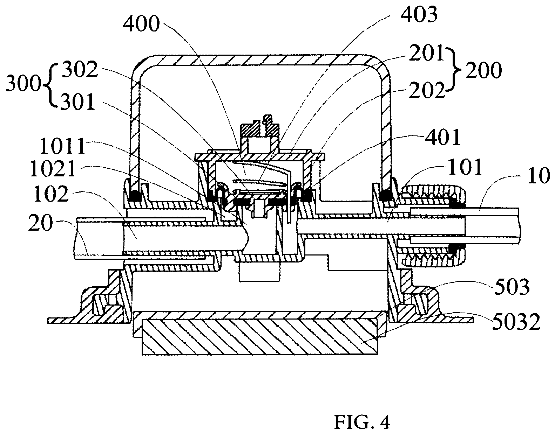

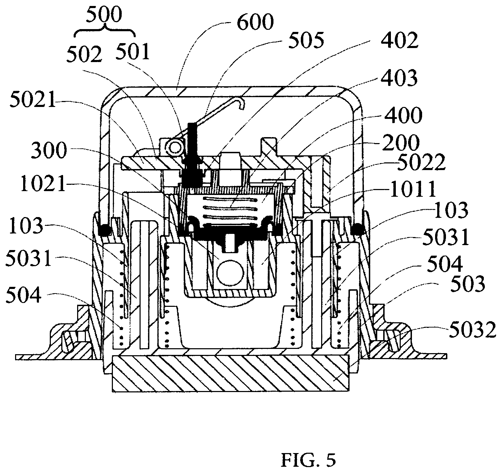

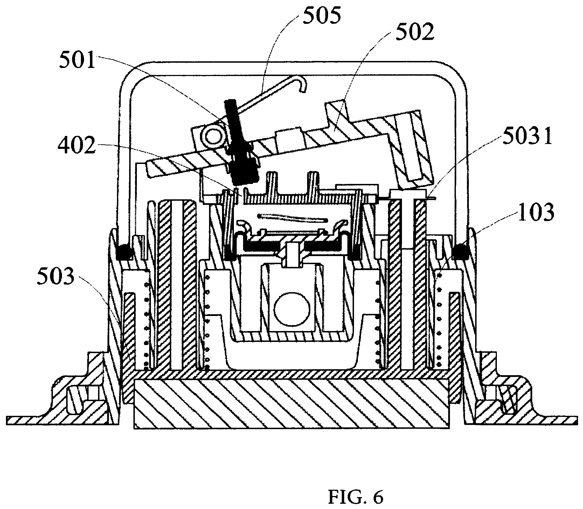

Referring to FIGS. 1 through 6, provided herein is a water-saving valve. Wherein, FIG. 1 is a perspective view of the water-saving valve; FIG. 2 is an exploded view of the water-saving valve; FIG. 3 is a top view of the water-saving valve; FIG. 4 is a sectional view along the A-A section of the water-saving valve shown in FIG. 3; FIG. 5 is a sectional view along the B-B section of the water-saving valve shown in FIG. 3; FIG. 6 is another sectional view along the B-B section of the water-saving valve.

The water-saving valve can pass through a water inlet pipe 10 and a water outlet pipe 20, the water inlet pipe 10 is configured to communicate with the water source, and water outlet pipe 20 is configured to communicate with a water-spraying device, such as a nozzle or a spray pipe of the water-spraying toys. Thus, the water-spraying device is in communication with the water source to realize the water spraying function when the water-saving valve is in the open state; and when the water-saving valve is in the closed state, the communication between the water-spraying device and the water source is cut off by the water-saving valve so as to stop spraying water.

The water-saving valve comprises a valve seat 100. A water inlet passageway 101 and a water outlet passageway 102 are formed in the valve seat 100, wherein, the water inlet passageway 101 is configured to communicate with the water inlet pipe 10, and the water outlet passageway 102 is configured to communicate with the water outlet pipe 20, thereby disposing the water-saving valve between the water source and the water-spraying device.

The water-saving valve further comprises a pressure regulating chamber body 200 and a movable valve plate 300. The pressure regulating chamber body 200 together with the movable valve plate 300 define one pressure regulating chamber 400.

In some embodiments, the pressure regulating chamber body 200 includes an end part 201 and a side wall 202. The side wall 202 is connected to the edge of the end part 201. The movable valve plate 300 is connected to the side wall 202. Thus, the pressure regulating chamber 400 is defined by the end part 201, the side wall 202, and the movable valve plate 300.

In some embodiments, the movable valve plate 300 includes a flexible sealing member 301 and a hard valve plate 302.

Specifically, the flexible sealing member 301 can be arranged into a ring, and the inner edge of the flexible sealing member 301 is connected to the hard valve plate 302, and the outer edge is connected to the pressure regulating chamber body 200. Thus, the flexible sealing member 301 can generate elastic deformation under the action of an external force, so that the movable valve plate 300 is configured to move between a first position and a second position, so as to block or open the water outlet passageway 102.

In some embodiments, the flexible sealing member can also be arranged in a circular shape. The hard valve plate can be attached to the surface of the flexible sealing member, and the outer edge of the flexible sealing member is coupled to the pressure regulating chamber body.

In addition, the flexible sealing member 301 is preferably made of rubber or silicone material.

In some embodiments, the end part 201 of the pressure regulating chamber body 200 can be arranged in a circular shape, and the side wall 202 can be arranged in a cylinder shape. At this time, the pressure regulating chamber 400 is formed into a cylindrical shape.

In some embodiments, the water outlet 1011 of the water inlet passageway 101 can be arranged to surround the water inlet 1021 of the water outlet passageway 102.

In some embodiments, the movable valve plate 300 is disposed at the water inlet 1021 of the water outlet passageway 102. Thus, the water inlet 1021 of the water outlet passageway 102 can be blocked or opened when the movable valve plate 300 moves along the axial direction between the first position and the second position.

In some embodiments, the water hole 401 is disposed on the position that the hard valve plate 302 close to the water inlet passageway 101, and the water hole 401 communicates with the water inlet passageway 101. Thus, the pressure regulating chamber 400 communicates with the water inlet passageway 101 via the water hole 401.

Water can flow through the water inlet pipe 10 and the water inlet passageway 101 in turn from the water source, and enter into the pressure regulating chamber 400 through the water hole 401 when the water inlet passageway 101 of the water-saving valve communicates with the water source via the water inlet pipe 10. The pressure in the pressure regulating chamber 400 is gradually increased with the water gradually flowing into the pressure regulating chamber 400 from the water source, when the pressure inside the pressure regulating chamber 400 is greater than that of outside the pressure regulating chamber 400, the movable valve plate 300 can gradually move towards the water inlet 1021 of the water outlet passageway 102 by different pressure inside and outside the pressure regulating chamber 400 acting on the movable valve plate 300, until the movable valve plate 300 blocks the water inlet 1021 of the water outlet passageway 102. That is, the water-saving valve can be changed from the open state shown in FIG. 6 to the closed state shown in FIG. 4.

Further, in order to change the pressure difference between the inner and the outer pressure in the pressure regulating chamber 400, so that the movable valve plate 300 moves to a position that can open the water inlet of the water outlet passageway 102, that is, in order to change the water-saving valve from the closed state shown in FIG. 4 to the open state shown in FIG. 6, the pressure regulating chamber body 200 is provided with a drain hole 402. Specifically, the drain hole 402 communicates with the pressure regulating chamber 400, thereby the water in the pressure regulating chamber 400 can flow out of the drain hole 402 when opening the drain hole 402, and then the pressure in the pressure regulating chamber 400 is decreased, so that the internal pressure in the pressure regulating chamber 400 is less than the external pressure, and the movable valve plate 300 moves to a position that can open the water outlet passageway 102. In addition, when blocking the drain hole 404, the water from the water source can pass through the water hole 401 again and gradually flow into the pressure regulating chamber 400, so that the water-saving valve can be gradually switched from the open state to the closed state.

As a result, using the water-saving valve provided by the embodiments disclosed herein, the pressure in the pressure regulating chamber 400 can be gradually decreased to that of less than the external pressure when the drain hole 402 is in the open state. Thus, the movable valve plate 300 can gradually move from a position of blocking the water outlet passageway 102 to a position of opening the water outlet passageway 102; the pressure in the pressure regulating chamber 400 can be gradually increased to that of greater than the external pressure when the drain hole 402 is in the closed state, and the movable valve plate 300 can gradually move from a position of opening the water outlet passageway 102 to a position of blocking the water outlet passageway 102, that is, after the water-saving valve being opened for a preset time, the water-saving valve can be automatically changed from the open state to the closed state. Therefore, the water-saving valve provided herein can be automatically shut down after it being opened for the preset time.

The length of the preset time is related to the hole diameter of the water hole 401 as well as the volume of the pressure regulating chamber 400. Therefore, the preset time can be adjusted by changing the hole diameter of the water hole 401 and/or the volume of the pressure regulating chamber 400, that is, it can be implemented to adjust the duration for the water-saving valve being opened. In practice, both the hole diameter of the water hole 401 and the volume of the pressure regulating chamber 400 can be set in accordance with the specific requirements.

It is noteworthy that the hole diameter of the water hole 401 is usually set to be smaller than that of the drain hole 402. Besides, when the hole diameter of the water hole 401 is small and the hard valve plate 302 with the water hole 401 is an injection molded part, in order to facilitate the manufacture, forming the hard valve plate 302 with the water hole 401 in the injection molding, can form a water hole with large hole diameter, then, the metal wire is inserted into the water hole, so as to reduce the effective hole diameter of the water hole and to achieve the effect identical to that of the water hole with the small hole diameter.

Specifically, in some embodiments, a first reset spring 403 is disposed within the pressure regulating chamber 400. The first end of the first reset spring 403 abuts the end part 201 of the pressure regulating chamber body 200, and the second end abuts the movable valve plate 300. The extension portion of the second end of the first reset spring 403 passes through the water hole 401 to reduce the effective hole diameter of the water hole 401.

Therefore, in practice, it is possible to replace the first reset spring 403 with different sizes (for example, formation of a section diameter of metal wire of the first reset spring 403) to change the effective hole diameter of the water hole 401, so as to change the length of the preset time.

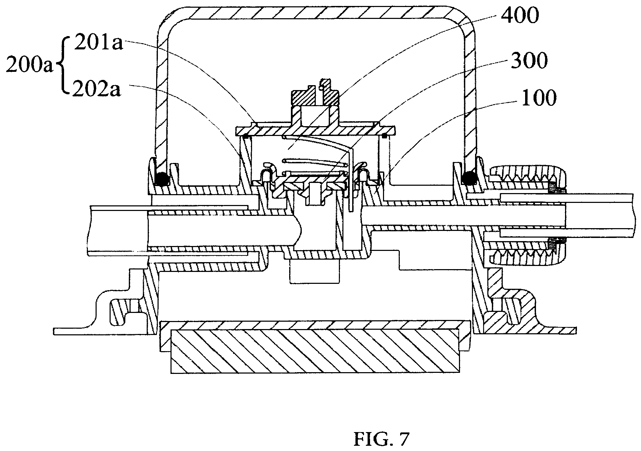

In some embodiments, the pressure regulating chamber body is configured as a pressure regulating chamber body 200a shown in FIG. 7, which is different from the above described pressure regulating chamber body 200. The side wall 202a of the pressure regulating chamber body 200a is formed on the valve seat 100, that is to say, the side wall 202a of the pressure regulating chamber body 200a is formed by partial valve seat 100. The end part 201a is attached to the valve seat 100, and the movable valve plate 300 is also connected to the valve seat 100. Thus, the end part 201a and the movable valve plate 300 together with the portion of the valve seat 100 between the end part 201a and the movable valve plate 300 define the pressure regulating chamber 400. In addition, the end part 201a is configured to removably connected with the upper end of the side wall 202a of the pressure regulating chamber body 200a, so as to facilitate the assembly and replacement of the components (for example, the first reset spring 403) within the pressure regulating chamber 400.

Further refer to FIGS. 4 through 6; the water-saving valve further comprises a drain assembly 500 configured to block or open the drain hole 402.

In some embodiments, the drain assembly 500 includes a sealing part 501 and a rotatable part 502. In some embodiments, as shown in FIG. 5, the rotatable part 502 is configured as a rotatable rod. The first end 5021 of the rotatable rod 502 is supported on the pressure regulating chamber body 200, and the second end 5022 of the rotatable rod 502 rotates about a supporting point. The sealing part 501 is disposed between the first end 5021 and the second end 5022 of the rotatable rod 502. Thus, it's possible to drive the sealing part 501 assembled on the rotatable rod 502 to block or open the drain hole 402 when the second end 5022 of the rotatable rod 502 rotates about the supporting point. Taking the drain assemblies shown in FIGS. 5 and 6 as examples, the rotatable rod 502 can drive the sealing part 501 which is assembled on the rotatable rod 502 to open the drain hole 402 when the second end 5022 of the rotatable rod 502 rotates counterclockwise about the supporting point; and the rotatable rod 502 can drive the sealing part 501 which is assembled on the rotatable rod 502 to block the drain hole 402 when the second end 5022 of the rotatable rod 502 rotates clockwise about the supporting point.

In some embodiments, the drain assembly 500 further comprises a button 503 configured to drive the second end 5022 of the rotatable rod 502 to rotate about the supporting point to an open position, in which the seal part opens the drain hole 402. Taking the drain assemblies shown in FIGS. 5 and 6 as examples, the button 503 drives the second end 5022 of the rotatable rod 502 to rotate counterclockwise about the supporting point, until the sealing part 501 assembled on the rotatable rod 502 opens the drain hole 402 when the button 503 is pressed.

In some embodiments, the button 503 is provided with a slide bar 5031, and the slide bar 5031 is inserted through a pipe 103 formed on the valve seat 100 and abuts the second end 5022 of the rotatable rod 502, so as to drive the second end 5022 of the rotatable rod 502 to rotate about the supporting point to the open position, in which the seal part opens the drain hole.

In some embodiments, in order to make the button 503 stably assembled on the valve seat 100, there can be configured with a plurality of the slide bars 5031, and can also be configured with a plurality of the pipes 103, wherein a plurality of the slide bars 5031 are inserted through a plurality of the pipes 103 respectively. It is noteworthy that only one of the pluralities of the slide bars 5031 may be needed to abut the second end 5022 of the rotatable rod 502.

In some embodiments, the button 503 is further provided with a so cushion part 5032 to improve the comfort degree when the button 503 is pressed by the user.

In some embodiments, the drain assembly 500 further comprises a second reset spring 504 disposed between the button 503 and the valve seat 100; and the second reset spring 504 is configured to drive the button 503 to restore to an original position when the button is released, so that the rotatable rod 502 restores to a blocking position, and the seal part blocks the drain hole 402. Taking the drain assemblies shown in FIGS. 5 and 6 as examples, when pressing the button 503, the second reset spring 504 accumulates the force, and when the button 503 is released, the second reset spring 504 releases the accumulative force, so that the button 503 is restored, and the rotatable rod 502 restores to a position that the sealing part 501 assembled on the rotatable rod 502 can block the drain hole 402.

In some embodiments, the second reset spring 504 can be sheathed on the outer side of the pipe 103. Besides, it can be configured with a plurality of the second reset springs 504, which are respectively sheathed on a plurality of the pipes 103.

In some embodiments, the drain assembly 500 further comprises a reset mechanism 505. The reset mechanism 505 is configured to drive the rotatable rod 502 to restore to a blocking position when the button is released, so as to make the seal part block the drain hole 402. Specifically, the reset mechanism 505 can be configured as a torsion spring.

In some embodiments, one end of the reset mechanism 505 abuts the rotatable rod 502, and the other end abuts a protective cover 600, wherein, the protective cover 600 is coupled to the valve seat 100 and is configured to protect the movable valve plate 300 and the drain assembly 500.

In addition, the water-saving valve provided by the embodiments of the invention can be assembled on a water-spraying toy. One end of the water-saving valve communicates with the water source via the water inlet pipe 10, and the other end communicates with a water spray pipe or a nozzle of the water-spraying toy via the water outlet pipe 20.

The water-saving valve is in a closed state when the water-spraying toy is in a stand-by state, that is, the movable valve plate 300 blocks the water outlet passageway 102. At this time, the water spray pipe or the nozzle stops spraying water. When using the water-spraying toy, the button 503 is pressed by the user to open the drain hole 402, so as to decrease the pressure in the pressure regulating chamber 400, so that the movable valve plate 300 moves to a position of opening the water outlet passageway 102. At this time, the nozzle or the water spray pipe starts spraying water. When the button 503 is released by the user for entertainment, at which point the button 503 is restored, the rotatable rod 502 is restored, and the sealing part 501 is restored to a blocking position, and the seal part blocks the drain hole 402, the water from the water source flows through the water inlet pipe 10 and the water inlet passageway 101 in turn, and gradually flows through the water hole 401 and enters into the pressure regulating chamber 400, then the pressure inside the pressure regulating chamber 400 is increased, and the movable valve plate 300 moves gradually toward the water outlet passageway 102, and moves to the position of blocking the water outlet passageway 102 after the preset time. At this time, the nozzle or the water spray pipe stops spraying water.

It can be seen that the water spraying function can be automatically closed by the water spraying toy after the preset time when the water-saving valve is applied to a water-spraying toy, so as to save water resources.

## Claims

1. A water-saving valve comprising:
a water inlet passageway and a water outlet passageway;
a pressure regulating chamber body and a movable valve plate, wherein the pressure regulating chamber body and the movable valve plate define one pressure regulating chamber, the pressure regulating chamber communicates with the water inlet passageway via a water hole on the movable valve plate, the pressure regulating chamber body is provided with a drain hole, the drain hole communicates with the pressure regulating chamber, and the movable valve plate is configured to move between a first position and a second position by different pressure inside and outside the pressure-regulating chamber acting on the movable valve plate to block or open the water outlet passageway; and
a drain assembly configured to block or open the drain hole.

2. The water-saving valve of claim 1, wherein the water outlet of the water inlet passageway surrounds the water inlet of the water outlet passageway.

3. The water-saving valve of claim 2, wherein the movable valve plate is configured to move axially between the first position and the second position to block or open the water inlet of the water outlet passageway.

4. The water-saving valve of claim 1, wherein the water inlet passageway and the water outlet passageway are formed on a valve seat.

5. The water-saving valve of claim 1, wherein the pressure regulating chamber body includes an end part and a side wall, the end part and the side wall together with the movable valve plate define the pressure regulating chamber.

6. The water-saving valve of claim 5, wherein an upper end of the side wall of the pressure regulating chamber body is connected with the edge of the end part.

7. The water-saving valve of claim 5, wherein the side wall of the pressure regulating chamber body is formed on the valve seat and the end part is removably connected with the upper end of the side wall of the pressure regulating chamber body.

8. The water-saving valve of claim 1, wherein the movable valve plate comprises a flexible sealing member and a hard valve plate, and the water hole is disposed on the hard valve plate.

9. The water-saving valve of claim 1, wherein a first reset spring is disposed within the pressure regulating chamber, the first end of the first reset spring abuts the end part of the pressure regulating chamber body, the second end abuts the movable valve plate, and the extension portion of the second end of the first reset spring is inserted through the water hole.

10. The water-saving valve of claim 1, wherein the drain assembly comprises:
a sealing part; and
a rotatable part,
wherein, the sealing part is disposed on the rotatable part, for blocking or opening the drain hole.

11. The water-saving valve of claim 10, wherein the rotatable part, is configured as a rotatable rod; the first end of the rotatable rod is supported on the pressure regulating chamber body, and the second end of the rotatable rod rotates about a supporting point; the sealing part is disposed between the first end and the second end of the rotatable rod; and the rotatable rod is configured to drive the sealing part disposed on it to block or open the drain hole when the second end of the rotatable rod rotates about the supporting point.

12. The water-saving valve of claim 11, wherein the drain assembly further comprises a button configured to drive the second end of the rotatable rod to rotate about the supporting point to an open position, in which the seal part opens the drain hole.

13. The water-saving valve of claim 12, wherein the button is provided with a slide bar, and the slide bar is inserted through a pipe formed on the valve seat and abuts the second end of the rotatable rod, to drive the second end of the rotatable rod to rotate about the supporting point to the open position, in which the seal part opens the drain hole.

14. The water-saving valve of claim 12, wherein the drain assembly further comprises a second reset spring disposed between the button and the valve seat; and the second reset spring is configured to drive the button to restore to an original position when the button is released, so that the rotatable rod restores to a blocking position, and the seal part blocks the drain hole.

15. The water-saving valve of claim 12, wherein the drain assembly further comprises a reset mechanism configured to drive the rotatable rod to restore to the blocking position when the button is released, so as to make the seal part block the drain hole,
wherein the reset mechanism is preferably configured as a torsion spring.
